Europäisches Patentamt

European Patent Office

Office européen des brevets

(19)

(11) Veröffentlichungsnummer: **0 071 663**
**B1**

(12) **EUROPÄISCHE PATENTSCHRIFT**

(45) Veröffentlichungstag der Patentschrift: 03.12.86

(51) Int. Cl.⁴: **H 02 M 7/04**

(21) Anmeldenummer: **81106182.9**

(22) Anmeldetag: **07.08.81**

(54) **Integrierbare Schaltungsanordnung zur Versorgungsspannungsregelung nach dem Schaltregler-Prinzip in Fernsehgeräten.**

(43) Veröffentlichungstag der Anmeldung:
16.02.83 Patentblatt 83/07

(45) Bekanntmachung des Hinweises auf die Patenterteilung:
03.12.86 Patentblatt 86/49

(84) Benannte Vertragsstaaten:
FR GB IT NL

(56) Entgegenhaltungen:
DE-A-2 843 988
DE-A-3 025 719

IBM TECHNICAL DISCLOSURE BULLETIN, Band 23, Nr. 2, Juli 1980, Seiten 466-467, New York, USA Q.L. BENEDICT et al.: "Digital regulator"

IBM TECHNICAL DISCLOSURE BULLETIN, Band 21, Nr. 6, November 1978, Seiten 2370-2371, New York, USA J.A. DICKERSON et al.: "Digitally derived regulating pulse-width modulator"

(73) Patentinhaber: **ITT INDUSTRIES INC.**
**320 Park Avenue**
**New York, NY 10022 (US)**

(72) Erfinder: **Novotny, Bernd, Ing. (grad.)**
**Belchenstrasse 12**
**D-7803 Gundelfingen (DE)**

(74) Vertreter: **Morstadt, Volker, Dipl.-Ing.**
**c/o Deutsche ITT Industries GmbH**
**Patent/Lizenzabteilung Postfach 840 Hans-Bunte-Strasse 19**
**D-7800 Freiburg/Brsg. (DE)**

(56) References cited:
ELECTRONIC DESIGN, Band 3, 1. Februar 1979, Seite 102, Rochelle Park, N.J., USA "IC switched-mode controller monitors and protects, too"

ELECTRONIC DESIGN, Band 2, 18. Januar 1980, Seiten 94-101, Rochelle Park, N.J., USA "Computer modeling of pulse-width modulators simplifies analysis of switching regulators"

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft integrierbare Schaltungsanordnungen zur Regelung von Versorgungsgleichspannungen nach dem Schaltregler - Prinzip, nach dem Oberbegriff des Anspruchs 1. Eine solche Schaltungsanordnung ist aus "IBM Technical Disclosure Bulletin", Juli 1980, Seiten 466 und 467 bekannt.

Sollen derartige Schaltregler in Fernsehgeräten verwendet werden, so sind spezielle Forderungen zu erfüllen. Als Hauptforderung ist dabei anzusehen, daß die Regelgeschwindigkeit, mit der eine Regelabweichung zu einer Nachregelung führt, so groß sein muß, daß dieseinnerhalb der Zeilendauer erfolgt. Die oben genannte Veröffentlichung enthält keinen Hinweis darauf, wie ein Betrieb in Fernsehgeräten mit dieser Schaltungsanordnung zu ermöglichen ist, insbesondere im Hinblick auf kritisch werdende Störfälle der Spannungsversorgung.

Die Aufgabe der in den Ansprüchen gekennzeichnet Erfindung besteht daher darin, den bekannten integrierten Schaltregler so weiterzubilden, daß er für den Betrieb in Fernsehgeräten geeignet ist, wobei nur solche weitere digitale Grundschaltungen, wie Zähler und Verknüpfungsglieder, verwendet werden sollen, die in ihrer speziellen schaltungstechnischen Verknüpfung die spezielle Regelaufgabe zu lösen und insbesondere das impulsbreitenmodulierte Steuersignal zu erzeugen geeignet sind.

Weitere Schaltregler in integrierter Form für allgemeine Verwendung mit pulsbreiten moduliertem Steuersignal für das periodisch ein- und auszuschaltende Leistungshalbleiterbauelement sind auch in der Zeitschrift "Electronic Design", 01. Februar 1979, Seite 102 und 18. Januar 1980, Seiten 94-101 beschrieben. Die gezeigten Schaltregler erzeugen das pulsbreitenmodulierte Steuersignal nach Art analoger Schaltungen, d.h. in Abhängigkeit vom Ist/Soll-Vergleich ist die Pulsbreite kontinuierlich veränderbar. Bei diesen Schaltungen ist jeweils ein Sägezahngenerator vorgesehen, der als Vergleichsspannung bei der Erzeugung des pulsbreitenmodulierten Steuersignals dient. Dieser Sägezahngenerator hat in der dritt-genannten Literaturstelle einen Synchronisiereingang.

Andererseits ist es aus der DE—OS 28 43 988 bekannt, Regelschaltungen nach dem Schaltregler-Prinzip auch so aufzubauen, daß das pulsbreitenmodulierte Steuersignal aufgrund digitaler Schaltungsprinzipien erzeugt wird. Hierzu dient im wesentlichen ein Mikroprozessor, der, ausgehend von einem Taktsignal, das pulsbreitenmodulierte Signal in Schritten dieser Taktfrequenz erzeugt.

Die gestellte Aufgabe wird bei der gattungsgermäßen Schaltungsanordnung durch die kennzeichnenden Merkmale des Patentanspruchs 1 gelöst.

Die in den abhängigen Ansprüchen gekenzeichneten Weiterbildungen der Erfindung erweitern das im Anspruch 1 niedergelegte Prinzip der Erfindung durch die bei Regelschaltungen bekannten zusätzlichen Funktionen der sogenannten elektronischen Sicherung, also des Abschaltens des Reglers bzw. des Zurückregelns in einen ungefährlichen Belastungsbereich, wenn im Lastkreis ein Kurzschluß oder eine Überlastung auftritt. Diese zusätzlichen Funktionen sind dabei jedoch ebenfalls wie die Grundfunktionen mittels digitaler Schaltungs- und Funktionsprinzipien realisiert und unterscheiden sich somit von der nach analogen Prinzipien arbeitenden Realisierung bei den bekannten Anordnungen.

Der Gegenstand der Erfindung und dessen Weiterbildungen werden num anhand der Figuren der Zeichnung näher erläutert.

Fig. 1 zeigt in Form eines Prinzipschaltbilds ein Fernsehgerät—Netzteil unter Verwendung der Schaltungsanordnung nach der Erfindung,

Fig. 2 zeigt in Form eines Blockschaltbilds de Grundaufbau des der Erfindung zugrundeliegenden Prinzips,

Fig. 3 zeigt eine Weiterbildung der Anordnung nach Fig. 2 für den Anlaufbetrieb nach Einschalten der Netzspannung,

Fig. 4 zeigt eine Weiterbildung der Anordnung nach Fig. 3 mit Kurzschlußschutz im Meßkreis, und

Fig. 5 zeigt eine Weiterbildung der Anordnung nach Fig. 4 mit einer Erweiterung für den erwähnten Schutz bei Überlastung und Kurzschluß im Lastkreis.

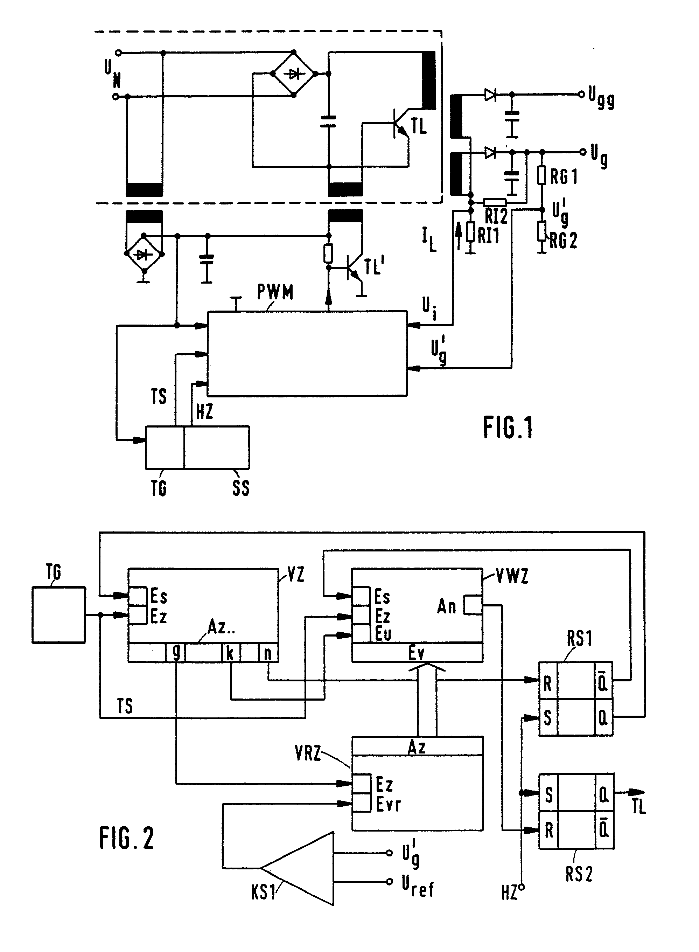

In Fig. 1 ist der vom Prinzip her übliche Aufbau eines Fernsehgerät - Netzteils unter Verwendung eines Schaltreglers gezeigt. Für die Zwecke der Erfindung sind die wesentlichen Teile dieses Prinzipschaltbilds mit Bezugzeichen versehen. So wird die Netzspannung $U_N$ über eine Gleichrichterbrücke und das Leistungshalbleiterbauelement TL an die Primärwicklung eines Haupttransformators gelegt. Ein weiterer kleiner Transformator speist einen weiteren Gleichrichter, dem die Betriebsspannung für den Schaltregler entnommen wird. Wie durch die gestrichelten Linien zum Ausdruck kommt, ist die Netz-Seite vollständig von der Gleichspannungsseite galvanisch getrennt, wie dies von den VDE-Normen gefordert wird.

Auf der netzgetrennten Seite ist das Halbleiterbauelement TL' gezeigt, das vom Pulsbreitenmodulator PWM angesteuert wird und über den zugeordneten weiteren Transformator auf das erwähnte Leistungshalbleiterbauelement TL in bekannter Weise einwirkt. Dadurch werden in den beiden gezeigten Sekundärwicklungen nach dem von Gleichspannungskonvertern her bekannten Sperrwandler - Prinzip entsprechende Wechselspannungen erzeugt, die gleichgerichtet die geregelten Spannungen $U_g$ und $U_{gg}$ ergeben. Am Abgriff des zwischen dem auf das Fernsehgerät - Chassis bezogenen Schaltungsnullpunkt und der geregelten Spannung $U_g$ liegenden Spannungsteilers RG1, RG2 wird die hierzu proportionale Spannung $U_g'$ abgenommen und dem Impulsbreitenmodulator PWM als Information über den Ist-Wert zugeführt. Ferner wird mittels des Strommeß-Widerstands RI1 der im Lastkreis fließende Laststrom $I_L$ gemessen und der daraus resultierende Spannungsabfall als Strominformation $U_i$ dem Pulsbreitenmodulator ebenfalls zugeführt. Der Abgriff für das Stromsignal $U_i$, also der Verbindungspunkt zwischen den Sekundärwicklungen und dem Strommeß-Widerstand RI1, ist über den Widerstand RI2 an die geregelte Spannung $U_g$ gelegt, so daß dieser Verbindungspunkt potentialmäßig festliegt.

In Fig. 1 ist ferner der Taktgenerator TG gezeigt, dessen Ausgangssignal als Taktsignal TS dem Pulsbreitenmodulator PWM zugeführt ist, ebenso wie die aus der Synchronsignal - Abtrennstufe SS des Fernsehgeräts stammenden Horizontal - Synchronimpulse HZ.

In Fig. 2 ist das Grundprinzip des Pulsbreitenmodulators PWM nach Fig. 1 in Form eines schematischen Blockschaltbilds gezeigt. Das pulsbreitenmodulierte Signal wird mittels Digitalschaltungen, ausgehend von der Periodendauer des Taktsignals, erzeugt und ist in Schritten dieser Periodendauer veriabel. Als Taktgenerator TG eignet sich beispielsweise ein Quarzoszillator mit der vierfachen Farbhilfsträgerfrequenz von Farbfernsehgeräten, also ein Oszillator mit einer Schwingfrequenz von 17,7 MHz.

Der Soll/Ist-Vergleich wird von der ersten digitalen Komparatorstufe KS1 vorgenommen, an deren erstem Eingang die Referenzspannung $U_{ref}$ und an deren zweitem Eingang die der geregelten Spannung $U_g$ proportionale Spannung $U_g'$ nach Fig. 1 liegt. Die Referenzspannung $U_{ref}$ kann auf irgendeine der bekannten Arten erzeugt werden, also beispielsweise mittels einer Z-Diode oder einer temperaturkomponensierten Z-Diode. Der erste digitale Komparator KS1 erzeugt an seinem Ausgang lediglich ein Binärsignal, dessen beide Werte, also ein einem positiven Spannungswert zugeordneter H-Pegel und ein einem dazu niedrigeren Spannungswert zugeordneter L-Pegel, den beiden Eingangssignalbereichen $U_{ref} > U_g'$ bzw. $U_{ref} < U_g'$ zugeordnet sind. Bei der Erfindung wird also der bei üblichen analogen Regelschaltungen verwendete Regelverstärker durch die Komparatorstufe ersetzt, die lediglich ein Binärsignal bezüglich des Unter- bzw. Überschreitens der Referenzspannung $U_{ref}$ durch den Ist-Wert in Form der Spannung $U_g'$ liefert. Auch die in den weiteren Ausführungsbeispielen und Weiterbildungen hinzutretenden weiteren digitalen Komparatorstufen sind derartige Stufen mit Binärsignalausgang.

Der Taktgenerator TG ist am Zähleingang Ez des Vorwärtszählers VZ der Zählkapazität n und am Zähleingang Ez des Vorwahlzähler VWZ angeschlossen. Die Impulse des Taktsignals TS werden also mittels dieser beiden Zähler während bestimmter, noch zu schildernder Zeiten gezählt.

Von den Zählerstandausgängen Az... des Vorwärtszählers VZ werden einige zur Ableitung von Steuersignalen sowohl für den Vorwahlzähler VWZ als auch für den Vorwärts/Rückwärtszähler VRZ verwendet. So liegt der Zählerstandausgang Azg am Zähleingang Ez des Vorwärts/Rückwärtszählers, der somit diese Ausgangsimpulse des Vorwärtszählers VZ entweder in Vorwärts- oder Rückwärtsrichtung zählt, wobei das Ausgangssignal der ersten Komparatorstufe KS1 über den Umschalteingang Evr für Vor- oder Rückwärtszählen die Zählrichtung festlegt. Die Zählerstandausgänge Az des Vorwärts/Rückwärtszählers VRZ sind mit den Vorwahleingängen Ev des Vorwahlzählers VWZ parallel verbunden, was durch den bandartigen Pfeil in Fig. 2 angedeutet ist. Der zu bestimmten Zeitpunkten im Vorwärts/Rückwärtszähler VRZ erreichte Zählerstand wird also in den Vorwahlzähler VWZ eingelesen und dient dort zur Bestimmung der Dauer eines Zählzyklus. Der Vorwahlzähler VWZ kann dabei entwder ein Vorwärtszähler sein, der vom vorgewählten Zählerstand ausgehend bis zu einem bestimmten höheren Zählerstand zählt und dann an diesem Zählerstandausgang als Nulldurchgangsausgang An einen Impuls abgibt, oder er kann ein Rückwärtszähler sein, der vom vorgewählten Zählerstand aus auf Null zurückzählt und dann einen Nulldurchgangs - Ausgangsimpuls abgibt.

Der Übernahmeeingang Eu des Vorwahlzählers VWZ liegt an einem der anderen Zählerstandausgänge, nämlich dem Ausgang Azk, des Vorwärtszählers VZ. Hat dieser Zähler somit den Zählerstand k erreicht, wird der zu diesem Zeitpunkt im Vorwärts/Rückwartszähler erreichte Zählerstand als Vorwahl-Zählerstand in den Vorwahlzähler VWZ übernommen.

Der n-te Zählerstandausgang Azn des Vorwärtszählers VZ is mit dem R-Eingang des ersten RS-Flipflops RS1 verbunden, dessen Q-Ausgang am Start- und Freigabeeingang Es des Vorwärtszählers VZ liegt, während dessen $\bar{Q}$-Ausgang mit dem Start- und Freigabeeingang Es des Vorwahlzählers VWZ verbunden ist. Am S-Eingang des ersten RS-Flipflops RS1 liegen die Horizontal - Synchronimpulse HZ. Zu Beginn jeden Horizontalimpulses wird das erste RS-Flipflop RS1 also gesetzt, und durch das entsprechende Q-Signal wird der Vorwärtszähler VZ gestartet. Hat er seinen n-ten Zählerstand erreicht, so wird das erste RS-Flipflop RS1 wieder zurückgesetzt, so daß einerseits der Vorwärtszähler VZ nicht weiterzählen kann, andererseits jedoch über das $\bar{Q}$-Signal der Vorwahlzähler VWZ nun gestartet wird.

Der Nulldurchgangsausgang An des Vorwahlzählers VWZ ist am R-Eingang des zweiten RS-Flipflops RS2 angeschlossen, an dessen S-Eingang die Horizontalimpulse HZ liegen. Dieses Flipflop wird also ebenfalls wie das Flipflop RS1 durch jeden Horizontalimpuls gesetzt und bei Erreichen des Nulldurchgangs des Vorwahlzählers VWZ zurückgesetzt. Am Q-Ausgang des zweiten RS-Flipflops RS2 entsteht somit ein Impuls, der der impulsbreitenmodulierte Impuls zur Ansteuerung des Leistungshalbleiterbauelements TL ist.

Dieser Ansteuerimpuls setzt sich somit zeitlich aus einem ersten Teil zusammen, der durch die Zählkapazität n des Vorwärtszählers VZ vorgegeben ist, und aus einem zweiten Teil, der durch den zum Übernahmezeitpunkt durch den Zählerstand des Vorwärts/Rückwärtszählers gegebenen Zählerstand bestimmt ist. Da dieser Zählerstand aber durch den Soll/Ist-Vergleich beeinflußt wird, ergibt sich die beabsichtige Regelwirkung. Das impulsbreitenmodulierte Signal hat also eine durch den Vorwärtszähler VZ vorgegebene minimale Impulsbreite und eine maximale Impulsbreite, die durch die Zählkapazitäten des Vorwärtszählers VZ und des Vorwärts/Rückwärtszählers VRZ festgelegt ist. die Zählkapazitäten der drei Zähler VZ, VWZ, VRZ werden unter Berücksichtigung der Frequenz des Taktgenerators TG und der Zeilendauer so gewählt, daß die maximale Impulsbreite des impulsbreitenmodulierten Signals einen bestimmten Teil der Zeilendauer, z.B. 44 µs, nicht überschreitet.

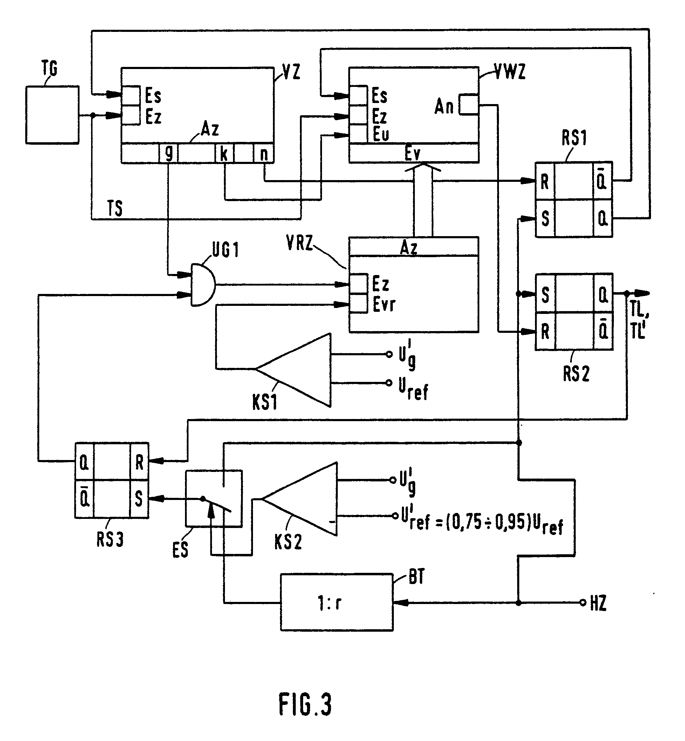

In Fig. 3 ist eine Weiterbildung der Anordnung nach Fig. 2 gezeigt, die für die Anlaufphase des Schaltreglers nach Einschalten der Netzspannung zusätzliche Schaltungsteile enthält. Hierzu ist die zweite digitale Komparatorstufe KS2 vorgesehen, die die Spannung $U'_g$ mit einer Bezugsspannung $U'_{ref}$ vergleicht, die etwa das 0,75- bis 0,95 fache der Referenzspannung $U_{ref}$ beträgt. Liegt also die der geregelten Spannung $U_g$ proportionale Spannung $U'_g$ um 5 bis 25 % unterhalb ihres Nominalwertes, so gibt die zweite Komparatorstufe KS2 den einen Binärsignalpegel und oberhalb dieses Bereichs den anderen Binärsignalpegel ab. Diese beiden Signalpegel steuern den Umschaltkontakt des elektronischen Umschalters ES, dessen Ausgang am S-Eingang des dritten RS-Flipflops RS3 liegt. Am einen Eingang des Umschalters ES liegen die Horizontal-Synchronimpulse HZ und am anderen der Ausgang des Frequenzteilers BT, dessen Eingang ebenfalls die Horizontal-Synchronimpulse HZ zugeführt sind.

Der R-Eingang des dritten RS-Flipflops RS3 liegt am Q-Ausgang des zweiten RS-Flipflops RS2, erhält also den impulsbreitenmodulierten Impuls zugeführt. Der Q-Ausgang des dritten RS-Flipflops RS3 liegt am einen Eingang des ersten UND-Gliedes UG1, das mit seiner anderen Eingangs-Ausgangs-Strecke in die Verbindungsleitung zwischen dem einen Zählerstandausgang Azg des Vorwärtszählers VZ und dem Zähleingang Ez des Vorwärts/Rückwärtszählers VRZ eingefügt ist.

In der Anlaufphase, also solange die Spannung $U'_g$ kleiner als 95 bis 75 % ihres Soll-Wertes ist, wird das dritte RS-Flipflop RS3 durch die durch den Teilerfaktor des Frequenzteilers BT verringerte Anzahl von Horizontalimpulsen gesetzt. Somit werden über das erste UND-Glied UG1 die Zählimpulse zum Vorwärts/Rückwärtszähler durchgelassen. Die Änderung von dessen Zählerstand Az erfolgt somit wesentlich langsamer, d.h., das impulsbreitenmodulierte Signal wird in der Anlaufphase nicht während der Dauer jeder Zeile, sondern nur während jeder r-ten Zeile verändert, wenn mit r der Divisor des Frequenzteilers BT bezeichnet ist.

Hat der Ist-Wert der Spannung $U'_g$ dagegen die Bezugsspannung $U'_{ref}$ überstrichen, so liegen am S-Eingang des dritten RS-Flipflops RS3 direkt die Horizontal-Synchronimpulse HZ, so daß sich ein Betrieb wie nach Fig. 2 einstellt, weil während jeden Synchronimpulses die Ausgangsimpulse des Zählerstandausgangs Azg des Vorwärtszählers VZ zum Zähleingang Ez des Vorwärts/Rückwärtszählers VRZ gelangen.

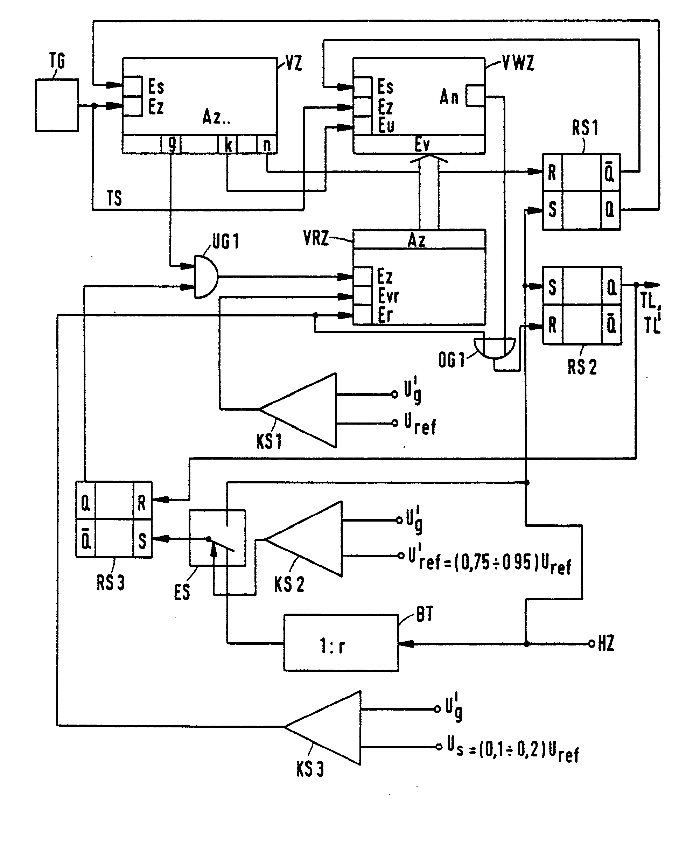

In Fig. 4 ist eine Weiterbildung der Anordnung nach Fig. 3 gezeigt, die die gegenüber Fig. 3 zusätzlichen Schaltungsteile, die dritte digitale Komparatorstufe KS3 und das erste ODER-Glied OG1, betrifft. Diese beiden zusätzlichen Schaltungsteile können jedoch auch bei der Anordnung nach Fig. 2, d.h. also ohne die in Fig. 3 zusätzlichen Schaltungsteile, vorgesehen werden. Sie betreffen den Meßkreis-Kurzschlußschutz der Regelschaltung und sind somit auch unabhängig vom Einsatz der Anlaufschaltung nach Fig. 3 einsetzbar.

Die dritte Komparatorstufe KS3 vergleicht die der geregelten Spannung $U_g$ proportionale Spannung $U'_g$ mit der festen Spannung $U_s$ einer ersten Spannungsschwelle, die etwa das 0,1- bis 0,2 fache der Referenzspannung $U_{ref}$ beträgt. Das Ausgangssignal der dritten Komparatorstufe KS3 ist dem nunmehr mit dem Rückstelleingang Er ausgerüsteten Vorwärts/Rückwärtszähler VRZ zugeführt und ferner über das erste ODER-Glied OG1 auch dem R-Eingang des zweiten RS-Flipflops RS2. Das erste ODER-Glied OG1 ist mit seiner anderen Eingangs - Ausgangs - Strecke in die Verbindungsleitung zwischen dem Nulldurchgangsausgang An des Vorwählzählers VWZ und dem R-Eingang des zweiten RS-Flipflops RS2 eingefügt.

Tritt somit ein Kurzschluß im Meßkreis der Regelschaltung auf (Kurzschluß von RG2), so wird einerseits durch das Ausgangssignal der dritten Komparatorstufe KS3 der Vorwärts/Rückwärtszähler in seine Nullstellung zurückgesetzt und damit dafür gesorgt, daß auch der Vorwahlzähler nach dem nächsten Übernahmeimpuls in seine Nullstellung gelangt. Zusätzlich wird aber durch diesen Ausgangsimpuls der dritten Komparatorstufe KS3 auch das die Dauer des impulsbreitenmodulierten Signals bestimmende zweite RS-Flipflop RS2 zurückgesetzt und dadurch auch die Ausgangsimpulsdauer sofort auf die minimale Dauer reduziert.

Diese Art des Revelschleifenschutzes wird somit ohne Verzögerung sofort nach Auftreten des Kurzschlusses wirksam und außerdem für die Dauer des Kurzschlusses aufrechterhalten. Ferner wird der Kurschlußschutz nach Wegfall des Kurzschlusses automatisch unwirksam, d.h., es liegt die Wirkungsweise einer sogennanten elektronischen Sicherung mit automatischer Wiedereinschaltung vor.

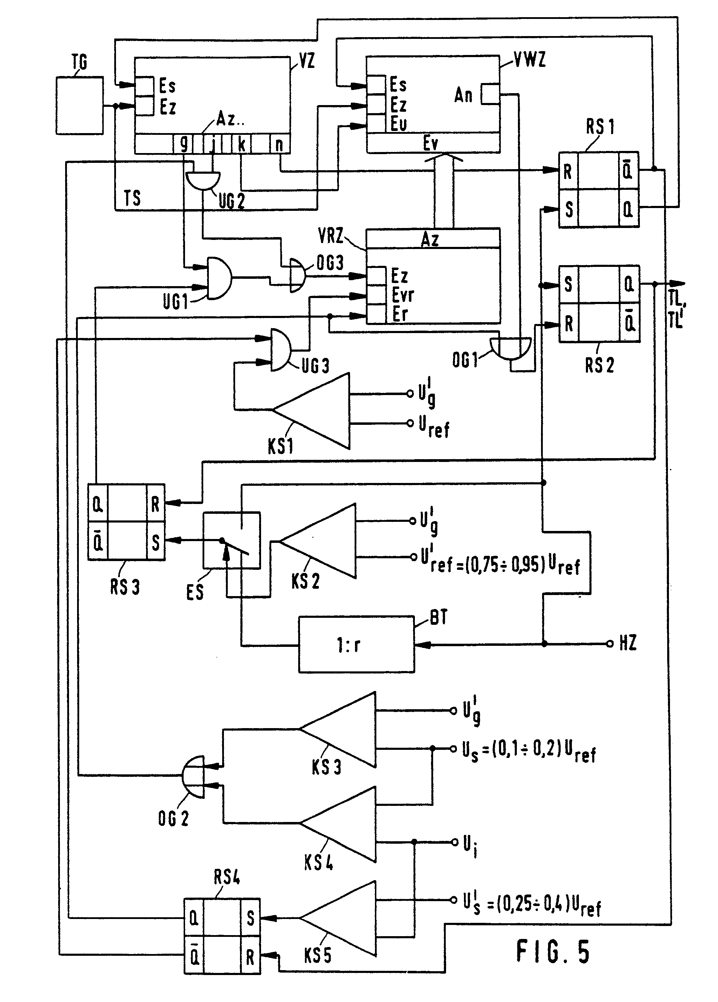

In Fig. 5 ist eine Weiterbildung der Anordnung nach Fig. 4 gezeigt, die zusätzlich zum Regelschleifenschutz auch noch einen Schutz bei Kurzschluß und strommäßiger Überlastung der Netzteilausgangsspannung darstellt. Hierzu sind die gegenüber Fig. 4 zusätzlichen Schaltungsteile vorgesehen, nämlich die vierte und die fünfte digitale Komparatorstufe KS4 und KS5, das vierte RS-Flipflop RS4, das zweite und das dritte ODER-Glied OG2, OG3 sowie das zweite und das dritte UND-Glied UG2, UG3. Das zweite ODER-Glied OG2 kann entfallen, wenn der Regelschleifenschutz mittels der dritten Komparatorstufe KS3 nicht vorgesehen wird.

Die vierte und die fünfte Komparatorstufe KS4, KS5 vergleichen die feste Spannung $U_s$ der ersten Spannungsschwelle bzw. die feste Spannung $U_s'$ einer zweiten Spannungsschwelle jeweils mit der laststromproportionalen Spannung $U_i$, vgl. Fig. 1. Die feste Spannung $U_s'$ der zweiten Spannungs-schwelle beträgt dabei das 0,25- bis 0,4 fache der Referenzspannung $U_{ref}$. Der Ausgang der vierten Komparatorstufe KS4 ist mit dem der dritten Komparatorstufe KS3 über das zweite ODER-Glied OG2 ODER-verknüpft und führt somit zum Rückstelleingang Er des Vorwärts/Rückwärtszählers VRZ. Überschreitet also der Laststrom einen der zweiten Spannungsschwelle entsprechenden Wert, so erfolgt die sofortige Zurückregelung auf die minimale Impulsbreite des impulsbreitenmodulierten Signals wie im oben geschilderten Kurzschlußfall der Regelschleife.

Mittels der fünften Komparatorstufe KS5 wird in einem Laststrombereich zwischen dem durch die erste Spannungsschwelle $U_s$ vorgegebenen maximalen Laststrom und dem durch die zweite Spannungsschwelle $U_s'$ vorgegebenen Laststrom eine stufenweise Verminderung der Impulsbreite des impulsbreitenmodulierten Signals erreicht. Hierzu vergleicht die fünfte Komparatorstufe KS5 den festen Spannungswert $U_s'$ der zweiten Spannungsschwelle mit der laststromabhängigen Spannung $U_i$. Der Ausgang der fünften Komparatorstufe KS5 ist mit dem S-Eingang des vierten RS-Flipflops RS4 verbunden, dessen R-Eingang mit dem $\overline{Q}$-Ausgang des ersten RS-Flipflops RS1 verbunden ist. Der Q-Ausgang des vierten RS-Flipflops Rs4 liegt am einen Eingang des zweiten UND-Glieds UG2, dessen anderer Eingang an einem weiteren Zählerstandausgang Azj des Vorwärtszählers VZ angeschlossen ist und dessen Ausgang am einen Eingang des dritten ODER-Gliedes OG3 liegt. Dieses ist mit seiner anderen Eingangs - Ausgangs - Strecke in die Verbindungsleitung zwischen dem Ausgang des ersten UND-Gliedes UG1 und dem Zähleingang Ez des Vorwärts/Rückwärtszählers eingefügt.

Liegt also der Laststrom $I_L$ im Bereich zwischen den von den beiden Spannungsschwellen $U_s$, $U_s'$ vorgegebenen Stromwerten, so wird dem Zähleingang Ez des Vorwärts/Rückwärtszählers VRZ zusätzlich zum Ausgangsimpuls am Zählerstandausgang Azg noch der weitere Impuls am Zählerstandausgang Azj des Vorwärtszählers VZ zugeführt, d.h., der Vorwärts/Rückwärtszähler wird mit doppelter Frequenz in Rückwärtsrichtung gezählt. In jeder Zeile ergibt sich also eine doppelt so große Impulsbreiten - Verringerungsgeschwindigkeit wie bei normalem Regelbetrieb.

Der $\overline{Q}$-Ausgang des vierten RS-Flipflops RS4 ist mit dem Ausgangssignal der ersten Komparator-stufe KS1 mittels des dritten UND-Glieds UG3 UND-verknüpft, d.h., daß unabhängig vom Ausgangssignal der Komparatorstufe KS1 der Vorwärts/Rückwärtszähler VRZ so lange nur rückwärts zählen kann, wie eine Stromüberschreitung proportional zur $U_s'$-Schwelle von der Komparatorstufe KS5 festgestellt wird.

Die Erfindung ist somit auf die in einem Fernsehgerät auftretenden Anforderungen an einem Schaltregler speziell ausgelegt. Sie kann insbesondere bei Anwendung der erläuterten Weiterbildungen den verschiedensten Störfällen angepaßt werden. Aufgrund des der Erfindung zugrundeliegenden Prinzips der Aufteilung der Impulsdauer des impulsbreitenmodulierten Signals in eine minimale Impulsdauer und eine variable ist immer sichergestellt, daß jeder Störfall entsprechend seiner Schwere entweder sofort oder mit doppelter Änderungsgeschwindigkeit zu einer Verringerung der momentanen Impulsbreite führt.

Es liegt im Rahmen der Erfindung, wenn die Zurückregelung der Impulsbereite in besonderen Fällen nicht nur mit doppelter Änderungsgeschwindigkeit, sondern durch Ausnutzung weiterer Ausgangsimpulse des Vorwärtszählers VZ entsprechend vergrößert wird.

Durch Anwendung des der Erfindung zugrundeliegenden Prinzips und weiterer Komparatorstufen können auch noch weitere Funktionen des Netzteils realisiert werden, so beispielsweise eine Abschaltung des Netzteils nach einer bestimmten Anzahl von auftretenden Störfällen oder eine elektronische Ein/Ausschaltung.

Bei einer zur Integrierung vorgesehenen integrierten Schaltung entsprechend der Erfindung beträgt die maximale Impulsbreite des impulsbreitenmodulierten Signals 44,8 µs und die minimale Impulsbreite 1,5 µs, während die Impulsbreite im eingeregelten Zustand 26 bis 32 µs beträgt. Die Abschaltverzögerung nach Ansprechen der beschriebenen Schutzschaltungen beträgt 1 µs.

Die Schaltung nach der Erfindung eignet sich aufgrund der Tatsache, daß sie mit ausschließlich digitalen Teilschaltungen arbeitet, insbesondere zur Integrierung mittels Isolierschicht - Feldeffekttransistoren, also zur Integrierung in der sogenannten MOS-Technik. Es können jedoch auch selbstverständlich bipolare Integrierungstechniken angewendet werden, die sich besonders für Digitalschaltungen eignen, also beispielsweise die Technik der sogenannten inte-grierten Injektionslogik ($I^2$L-Schaltungen) oder die Realisierung mittels anderer bipolarer Digital-Schaltungsfamilien.

Bei Ausführung des Frequenzteilers BT nach den Fig. 3 bis 5 als fünfstufiger Binärteiler beträgt die Äberungssteilheit im Anlaufbereich +56 ns pro 32 Zeilen. Die Änderungsgeschwindigkeit der Laststrombegrenzung begrägt -112 ns pro Zeile.

**Patentansprüche**

1. Integrierbare Schaltungsanordnung zur Regelung von Versorgungsgleichspannungen nach dem Schaltregler-Prinzip, wobei

— ein Leistungshalbleiterbauelement (TL) von einem Signal, das in Abhängigkeit von einem Soll/Ist-Vergleich pulsbreiten - moduliert ist, periodisch ein- und ausgeschaltet wird,

— das pulsbreitenmodulierte Signal mittels Digitalschaltungen, ausgehend von der Periodendauer eines Taktsignals (TS), erzeugt und in Schritten dieser Periodendauer veriabel ist,

— dem Soll/Ist-Vergleich eine erste digitale Komparatorstufe (KS1) dient, an deren erstem Eingang eine Referenzspannung ($U_{ref}$) und an deren zweitem Eingang eine der geregelten Spannung ($U_g$) proportionale Größe ($U'_g$) liegt und an deren Ausgang lediglich ein Binärsignal entsteht, dessen beide Werte den beiden Eingangssignalbereichen ($U_{ref} > U'_g$ bzw. $U_{ref} < U'_g$) zugeordnet sind,

— der Taktsignalgenerator (TG) am Zähleingang (Ez) eines Vorwahlzählers (VWZ) angeschlossen ist und

— ein Vorwärts/Rückwärtszähler (VRZ), abhängig vom Ausgangssignal der Komparatorstufe (KS1), in Vorwärts- oder in Rückwärtsrichtung geschaltet ist, wobei der jeweilige Zählerstand dem Vorwahlzähler (VWZ) zugeführt ist,

gekennzeichnet durch folgende Ausbildung für Fernsehgeräte:

— der Soll/Ist-Vergleich erfolgt während jeder Zeilendauer zeilensynchron,

— der Taktsignalgenerator (TG) ist am Zähleingang (Ez) eines Vorwärtszählers (VZ) der Zählkapazität n angeschlossen,

— einer (Azg) der Zählerstandsausgänge des Vorwärtszählers (VZ) ist mit dem Zähleingang (Ez) des Vorwärts/Rückwärtszählers (VRZ) verbunden,

— der Übernahmeeingang (Eu) des Vorwahlzählers (VWZ) liegt an einem (Azk) der anderen Zählerstandsausgänge des Vorwärtszählers (VZ),

— der R-Eingang eines ersten RS-Flipflops (RS1) liegt am n-ten Zählerstandsausgang (Azn) des Vorwärtszählers (VZ) und dessen Q-Ausgang am Starteingang (Es) des Vorwärtszählers (VZ), während dessen $\bar{Q}$-Ausgang mit dem Starteingang (Es) des Vorwahlzählers (VWZ) verbunden ist,

— des Horizontalsynchroniimpulse (HZ) des Fernsehgeräts liegen am S-Eingang des ersten RS-Flipflops (RS1) und am S-Eingang eines zweiten RS-Flipflops (RS2),

— am R-Eingang des zweiten RS-Flipflops (RS2) ist der Nulldurchgangsausgang (An) des Vorwahlzählers (VWZ) angeschlossen, und

— der Q-Ausgang des zweiten RS-Flipflops (RS2) ist der Ausgang für das pulsbreitenmodulierte Signal.

2. Schaltungsanordnung nach Anspruch 1, gekennzeichnet durch folgende Merkmale:

— eine zweite digitale Komparatorstufe (KS2) vergleicht die proportionale Spannung ($U'_g$) mit einer Bezugsspannung ($U'_{ref}$), die etwa das 0,75- bis 0,95 fache der Referenzspannung ($U_{ref}$) beträgt,

— der Ausgang der zweiten Komparatorstufe (KS2) liegt am Umschaltsteuereingang eines elektronischen Umschalters (ES), dessen einem Eingang die Horizontalsynchronimpulse (HZ) zugeführt sind,

— der andere Eingang des elektronischen Umschalters (ES) liegt am Ausgang eines Frequenzteilers (BT), dessen Eingang die Horizontalsynchronimpulse (HZ) zugeführt sind,

— der Ausgang des elektronischen Umschalters (ES) ist mit dem S-Eingang eines dritten RS-Flipflops (RS3) verbunden, dessen R-Eingang mit dem Q-Ausgang des zweiten RS-Flipflops (RS2) verbunden ist, und

— der Q-Ausgang des dritten RS-Flipflops (RS3) liegt am einen Eingang eines ersten UND-Gliedes (UG1), das mit seiner anderen Eingangs - Ausgangs - Strecke in die Verbindungsleitung zwischen dem einen (Azg) der Zählerstandausgänge des Vorwärtszählers (VZ) und dem Zähleingang (Ez) des Vorwärts/Rückwärtszählers (VRZ) eingefügt ist (Fig. 3).

3. Schaltungsanordnung nach anspruch 1 oder 2, gekennzeichnet durch folgende Merkmale:

— eine dritte digitale Komparatorstufe (KS3) vergleicht die der geregelten Spannung ($U_g$) proportionale Spannung ($U'_g$) mit der festen Spannung ($U_s$) einer ersten Spannungsschwelle, die etwa das 0,1- bis 0,2 fache der Referenzspannung ($U_{ref}$) beträgt, und

— der Ausgang der dritten Komparatorstufe (KS3) liegt am Rückstelleingang (Er) des Vorwärts/Rückwärtszählers (VRZ) und am einen Eingang eines ersten ODER-Gliedes (OG1), das mit seiner anderen Eingangs - Ausgangs - Strecke in die Verbindungsleitung zwischen dem Nulldurchgangsausgang (An) des Vorwahlzählers (VWZ) und dem R-Eingang des zweiten RS-Flipflops (RS2) eingefügt ist (Fig. 4).

4. Schaltungsanordnung nach einem der Ansprüche 1 bis 3, gekennzeichnet durch folgende Merkmale:

— eine vierte digitale Komparatorstufe (KS4) vergleicht die feste Spannung ($U_s$) einer ersten Spannungsschwelle, die etwa das 0,1- bis 0,2 fache der Referenzspannung (U$_{ref}$) beträgt, mit einer dem Laststrom (I$_L$) der geregelten Spannung (U$_g$) proportionalen Spannung (U$_i$),

— die laststromproportionale Spannung (U$_i$) ist am Abgriff eines Spannungsteilers abgenommen, der aus einem am Schaltungsnullpunkt liegenden Strommeß-Widerstand (RI1) im Lastkreis und aus einem weiteren Widerstand (RI2) besteht, über den der schaltungsnullpunktabgewandte Pol des Strommeß-Widerstands (RI1) mit der geregelten Spannung (U$_g$) verbunden ist,

— der Ausgang der vierten Kompaatorstufe (KS4) liegt am einen Eingang eines zweiten ODER-Gliedes (OG2), das mit seiner anderen Eingangs - Ausgangs - Strecke in die Verbindungsleitung zwischen dem Ausgang der dritten Komparatorstufe (KS3) und dem Rückstelleingang (Er) des Vorwärts/Ruckwärtszählers (VRZ) eingefügt ist,

— eine fünfte digitale Komparatorstufe (KS5) vergleicht die Spannung (U$'_s$) einer zweiten Spannungsschwelle, die etwa das 0,25- bis 0,4 fache der Referenzspannung (U$_{ref}$) beträgt, mit der laststromproportionalen Spannung (U$_i$),

— der Ausgang der fünften Komparatorstufe (KS5) liegt am S-Eingang eines vierten RS-Flipflops (RS4), dessen R-Eingang mit dem Q̄-Ausgang des ersten RS-Flipflops (RS1) verbunden ist,

— in die Verbindungsleitung zwischen dem Ausgang des ersten UND-Gliedes (UG1) und dem Zähleingang (Ez) des Vorwärts/Rückwartszählers (VRZ) ist die eine Eingangs - Ausgangs - Strecke eines dritten ODER-Gliedes (OG3) eingefügt,

— am einen Eingang eines zweiten UND-Gliedes (UG2) liegt der Q-Ausgang des vierten RS-Flipflops (RS4), am anderen Eingang liegt ein weiterer Zählerstandausgang (Azj) des Vorwärtszählers (VZ), und der Ausgang liegt am anderen Eingang des dritten ODER-Gliedes (OG3), und

— der Q̄-Ausgang des vierten RS-Flipflops (RS4) ist mit dem einen Eingang eines dritten UND-Gliedes (UG3) verbunden, das mit seiner anderen Eingangs - Ausgangs - Strecke in die Verbindungsleitung zwischen dem Ausgang der ersten Komparatorstufe (KS1) und dem Umschalteingang (Evr) des Vorwärts/Rückwärtszählers (VRZ) eingefügt ist (Fig. 5).

**Revendications**

1. Arrangement de circuit intégrable pour réguler des sources de courant continu selon le principe de la régulation par découpage dans lequel

— un dispositif de puissance à semi-conducteur est périodiquement mis en circuit fermé et ouvert par un signal à modulation de durée d'impulsions en fonction d'un comparaison nominal/réel,

— le signal à modulation de durée d'impulsions est produit à l'aide de circuits numériques à partir de la période d'un signal d'horloge (TS) et varie par pas de cette période,

— la comparaison nominal/réel est effectuée au moyen d'un premier étage de comparateur numérique (KS1) à la première entrée duquel est appliquée une tension de référence (U$_{ref}$), à la seconde entrée duquel est appliquée une grandeur (U$'_g$) proportionnelle à la tension régulée, et à la sortie duquel est simplement formé un signal binaire dont les deux valeurs sont affectées respectivement aux deux plages de signaux d'entrée (U$_{ref}$>U$'_g$ resp. U$_{ref}$<U$'_g$),

— le générateur de signaux d'horloge (TG) est reliée à l'entrée de comptage (Ez) d'un compteur préréglé (VWZ), et

— un compteur ascendant/descendant (VRZ) est commuté dans le sens de comptage ascendant ou descendant en fonction du signal de sortie de l'étage de comparateur (KS1), grâce à quoi la position du comptage correspondante du compteur ascendant (VWZ) est produite,

caractérisé par la configuration suivante pour les postes de télévision:

— la comparaison nominal/réel est effectuée durant chaque durée de ligne en synchronisme de ligne,

— le générateur de signaux d'horloge (TG) est relié à l'entrée de comptage (Ez) d'un compteur ascendant (VZ) de capacité de comptage égale à n,

— une (Azg) des sorties de position de comptage du compteur ascendant (VZ) est reliée à l'entrée de comptage (Ez) du compteur ascendant/descendant (VRZ),

— l'entrée de validation (Eu) du compteur préréglé (VWZ) est appliquée à l'une (Azk) des autres sorties de position de comptage du compteur ascendant (VZ),

— l'entrée R d'une première bascule RS (RS1) est appliquée à la n-ième sortie de position de comptage (Azn) du compteur ascendant (VZ) et sa sortie Q à l'entrée de départ (Es) du compteur ascendant (VZ), tandis que sa sortie Q̄ est reliée à l'entrée de départ (Es) du compteur préréglé (VWZ),

— les impulsions de synchronisation lignes (Hz) du poste de télévision sont appliquées à l'entrée S de la première bascule RS (RS1) et à l'entrée S d'une seconde bascule RS (RS2),

— à l'entrée R de la deuxième bascule RS est reliée la sortie de passage par zéro (An) du compteur préréglé (VWZ), et

— la sortie Q de la deuxième bascule RS (RS2) est la sortie pour le signal à modulation de durée d'impulsions.

2. Agencement de circuit selon la revendication 1 caractérisé par les éléments suivants:

— un deuxième étage de comparateur numérique (KS2) compare la tension proportionnelle (U$'_g$) avec une tension de repère (U'$_{ref}$) comprise entre 0,75 et 0,95 fois la tension de référence (U_ref),

— la sortie du deuxième étage de comparateur (KS2) est appliquée à l'entrée de commande de commutation d'un commutateur électronique (Es) à une entrée duquel sont appliquées les impulsions de synchronisation lignes,

— la sortie de commutateur électronique (ES) est reliée à l'entrée S d'une troisième bascule RS (RS3) dont l'entrée R est reliée à la sortie Q de la deuxième bascule RS (RS2), et

— la sortie Q de la troisième bascule RS (RS3) est appliquée à l'une des entrées d'une première porte ET (UG1), dont le trajet menant de son autre entrée à sa sortie est inséré entre ladite une (Azg) des sorties de position de comptage de compteur ascendant et l'entrée de comptage (Ez) du compteur ascendant/descendant (VRZ) (Fig. 3).

3. Agencement de circuit selon la revendication 1 ou 2 caractérisé par les éléments suivants:

— un troisième étage de comparateur numérique (KS3) compare la tension (U'_g) proportionnelle à la tension régulée (U_g) avec la tension fixe (U_s) d'un premier seuil de tension, qui est sensiblement comprise entre 0,1 et 0,2 fois la tension de référence (U_ref), et

— la sortie du troisième étage de comparateur (KS3) est appliquée à l'entrée de remise à zéro (Er) du compteur ascendant/descendant (VRZ) et à une des entrées d'une première porte OU (OG1), dont le trajet menant de son autre entrée à la sortie est inséré entre la sortie de passage par zéro du compteur préréglé (VWZ) et l'entrée R de la deuxième bascule RS (RS2) (Fig. 4).

4. Agencement de circuit selon l'une des revendications 1 à 3 caractérisé par les éléments suivants:

— un quatrième étage de comparateur numérique (KS4) compare la tension fixe (U_s) du premier seuil de tension, qui est comprise entre 0,1 et 0,2 fois la tension de référence (U_ref), avec une tension (U_i) proportionnelle au courant de charge (I_L) de la tension régulée (U_g),

— la tension (U_i) proportionnelle au courant de charge est prélévée au point de prélèvement d'un diviseur de tension constitué d'une résistance de mesure du courant (RI1) du circuit de charge reliée au point zéro du circuit, et d'une résistance supplémentaire (RI2) à travers laquelle la borne de la résistance de mesure du courant, non-reliée au point zéro du circuit, est reliée à la tension régulée (U_g),

— la sortie du quatrième étage de comparateur numérique (KS4) est appliquée à l'une des entrées d'une deuxième porte OU (OG2), dont le trajet menant de son autre entrée à sa sortie est inséré entre la sortie du troisième étage de comparateur (KS3) et l'entrée de remise à zéro (Er) du compteur ascendant/descendant (VRZ),

— un cinquième étage de comparateur numérique (KS5) compare la tension fixe (U'_s) d'un second seuil de tension, qui est comprise entre 0,25 et 0,4 fois la tension de référence (U_ref), avec la tension proportionnelle au courant de charge (U_i),

— la sortie du cinquième étage de comparateur numérique (KS5) est appliquée à l'entrée S d'une quatrième bascule RS (RS4) dont l'entrée R est reliée à la sortie Q̄ de la première bascule RS (RS1),

— le trajet menant d'une entrée à la sortie d'une troisième porte OU (OG3) est inséré entre la sortie de la première porte ET (UG1) et l'entrée de comptage (Ez) du compteur ascendant/descendant (VRZ),

— la sortie Q de la quatrième bascule RS (RS4) est appliquée à l'une des entrées d'une deuxième porte ET (UG2) à l'autre entrée de laquelle est appliquée la sortie de position de comptage (Azj) du compteur ascendant, et dont la sortie est appliquée à l'autre entrée de la troisième porte OU (OG3), et

— la sortie Q̄ de la quatrième bascule RS (RS4) est reliée avec l'une des entrées d'une troisième porte OU (UG3) dont le trajet menant de son autre entrée à sa sortie est inséré entre la sortie du premier étage de comparateur (KS1) et l'entrée de commutation (Evr) du compteur ascendant/descendant (VRZ) (Fig. 5).

**Claims**

1. Integrable circuit arrangement for regulating DC supply voltages according to the switching-regulator principle, wherein

— a power-switching semiconductor device (TL) is periodically switched on and off by a signal which is pulse-width modulated in dependence upon a nominal/actual value comparison,

— the pulse-width modulated signal is generated with the aid of digital circuits by starting out from the period of a clock signal (TS), and variable within steps of said period,

— said nominal/actual value comparison is performed by a first digital comparator stage (KS1), to the first input of which a reference voltage (U_ref) is applied and to the second input of which a quantity (U'_g) is applied which is in proportion to the regulated voltage (U_g), and at the output of which there is merely produced a binary signal, with the two values thereof being associated with the two input signal ranges (U_ref>U'_g and U_ref<U'_g respectively),

— the clock-signal generator (TG) is connected to the counting input (Ez) of a preset counter (VWZ), and

— a forward/backward counter (VRZ), in dependence upon the output signal of said comparator stage (KS1), is switched either in the forward or in the backward direction, with the respective counter reading being fed to said preset counter (VWZ),

characterized by the following embodiment for use with television receivers:

— the nominal/actual value comparison is performed during each line period in synchronism with the line frequency,
— the clock-signal generator (TG) is connected to the counting input (Ez) of a forward counter (VZ) having a counting capacity n,
— one (Azg) of the counter reading outputs of said forward counter (VZ) is connected to the counting input (Ez) of said forward/backward counter (VRZ),
— the enable input (E) of said preset counter (VWZ) is applied to one (Azk) of the other counter reading outputs of said forward counter (VZ),
— the R-input of a first RS flip-flop (RS1) is applied to the n-th counter reading output (Azn) of the forward counter (VZ), and the Q-output thereof to the start input (Es) of the forward counter (VZ), while the $\overline{Q}$-output thereof is connected to the start input (Es) of the preset counter (VWZ),
— the horizontal sync pulses (HZ) of the television receiver are applied to both the S-input of the first RS flip-flop (RS1) and to the S-input of a second RS flip-flop (RS2),
— to the R-input of the second RS flip-flop (RS2) there is connected the zero crossing output (An) of said preset counter (VWZ), and
— the Q-output of the second RS flip-flop (RS2) serves as the output for the pulse-width modulated signal.

2. A circuit arrangement as claimed in claim 1, characterized by the following features:

— a second digital comparator stage (KS2) compares the proportional voltage ($U_g'$) with a reference voltage ($U'_{ref}$) amounting to approximately 0.75 to 0.95 times the reference voltage ($U_{ref}$),
— the output of the second comparator stage (KS2) is applied to the switching control input of an electronic switch (ES) to the one input of which the horizontal sync pulses (HZ) are applied,
— the other input of said electronic switch (ES) is applied to the output of a frequency divider (BT) to the input of which the horizontal sync pulses (HZ) are fed,
— the output of said electronic switch (ES) is connected to the S-input of a third RS flip-flop (RS3) whose R-input is connected to the Q-output of the second RS flip-flop (RS2), and
— the Q-output of the third RS flip-flop (RS3) is applied to the one input of a first AND-gate (UG1) which, with its other input-output section is inserted into the connecting line between the one (Azg) of the counter reading outputs of said forward counter (VZ) and the counting input (Ez) of said forward/backward counter (VRZ) (Fig. 3).

3. A circuit arrangement as claimed in claims 1 or 2, characterized by the following features:

— a third digital comparator stage (KS3) compares the voltage ($U_g'$) which is in proportion to the regulated voltage ($U_g$), with the fixed voltage ($U_s$) of a first voltage threshold amounting to approximately 0.1 to 0.2 times the reference voltage ($U_{ref}$), and
— the output of the third comparator stage (KS3) is applied to the reset input (Er) of said forward/backward counter (VRZ) and to one input of a first OR-gate (OG1) which, with its other input-output section, is inserted into the connecting line between the zero crossing output (An) of said preset counter (VWZ) and the R-input of the second RS flip-flop (RS2) (Fig. 4).

4. A circuit arrangement as claimed in one of claims 1 to 3, characterized by the following features:

— a fourth digital comparator stage (KS4) compares the fixed voltage ($U_s$) of a first voltage threshold which amounts to approximately 0.1 to 0.2 times the reference voltage ($U_{ref}$), with a voltage ($U_i$) which is in proportion to the load current ($I_L$) of the regulated voltage ($U_g$),
— the voltage ($U_i$) which is in proportion to the load current, is taken off at the tapping point of a voltage divider consisting of a current-measuring resistor (RI1) in the load circuit and of a further resistor (RI2) across which the pole of the current-measuring resistor (RI1) not facing the zero point of the circuit, is connected to the regulated voltage ($U_g$),
— the output of the fourth comparator stage (KS4) is applied to the one input of a second OR-gate (OG2) which, with its other input-output section, is inserted into the connecting line between the output of the third comparator stage (KS3) and the reset input (Er) of the forward/backward counter (VRZ),
— a fifth digital comparator stage (KS5) compares the voltage ($U_s'$) of a second voltage threshold amounting to approximately 0.25 to 0.4 times the reference voltage ($U_{ref}$), with the voltage ($U_i$) which is in proportion to the load current,
— the output of the fifth comparator stage (KS5) is applied to the S-input of a fourth RS flip-flop RS4) whose R-input is connected to the $\overline{Q}$-output of the first RS flip-flop (RS1),
— into the connecting line extending between the output of the first AND-gate (UG1) and the counting input (Ez) of the forward/backward counter (VRZ) there is inserted the one input-output section of a third OR-gate (OG3),
— to the one input of a second AND-gate (UG2) there is applied the Q-output of the fourth RS

17

**0 071 663**

18

flip-flop (RS4), to the other input there is applied a further counter reading output (Azj) of the forward counter (VZ), and the output is applied to the other input of the third OR-gate (OG3), and

— the $\overline{Q}$-output of the fourth RS flip-flop (RS4) is connected to the one input of a third AND-gate (UG3) which, with its other input-output section, is inserted into the connecting line extending between the output of the first comparator stage (KS1) and the switching input (Evr) of the forward/backward counter (VRZ) (Fig. 5).

FIG.1

FIG.2

FIG.3

0 071 663

3

FIG. 5